# FASCICULE DE BREVET EUROPEEN

(11) **EP 2 576 038 B1**
(45) Date de publication et mention de la délivrance du brevet: **02.07.2014**
(21) Numéro de dépôt: 11725168.6
(22) Date de dépôt: 13.05.2011
(51) Int. Cl.: B01F 7/00, B01F 7/16, B01F 15/00, F16J 15/16, F16J 15/32

(54) **COUVERCLE DE FERMETURE POUR RECIPIENT EQUIPE D'UN JOINT D'ETANCHEITE**
VERSCHLUSSDECKEL FÜR EINEN BEHÄLTER MIT EINER DICHTUNG
CLOSING COVER FOR A CONTAINER PROVIDED WITH A SEAL

(30) Priorité: 07.06.2010 FR 1054451
(43) Date de publication de la demande: 10.04.2013
(73) Titulaire: Fillon Technologies, 28210 Faverolles (FR)
(72) Inventeur: DENIZE, Cyril, F-28300 Leves (FR); SAINT, Patrick, F-28000 Chartres (FR)
(74) Mandataire: Godineau, Valérie
(86) Numéro de dépôt international: PCT/FR2011/051077
(87) Numéro de publication internationale: WO 2011/154629

(56) Documents cités:
- EP-A1- 0 633 055
- EP-A1- 0 820 879
- EP-A1- 1 628 051
- EP-A1- 2 179 788
- DE-U1-202009 001 372
- US-A- 2 606 779

## Description

La présente invention concerne de manière générale les joints d'étanchéité pour couvercle de récipient équipé ou destiné à être équipé d'un moyen d'agitation.

L'invention concerne plus particulièrement un couvercle de fermeture pour récipient de liquide, ledit couvercle comprenant un passage d'axe permettant le passage à travers le couvercle d'un corps allongé d'un moyen d'agitation destiné à être monté rotatif dans ledit passage d'axe, ledit passage d'axe comprenant une partie dite de réception logeant un joint d'étanchéité annulaire destiné à être traversé par ledit corps allongé du moyen d'agitation.

Le joint d'étanchéité a pour fonction de permettre l'étanchéité entre le couvercle de fermeture et le corps allongé rotatif du moyen d'agitation qui traverse le couvercle. En particulier, le joint d'étanchéité permet d'éviter l'évaporation de vapeurs de solvant présents dans le liquide contenu dans le récipient, ainsi que les fuites dudit liquide par exemple pendant la rotation du moyen d'agitation ou au cours de manipulations du récipient en dehors de l'armoire de stockage.

On connaît de l'état de la technique des couvercles tels que décrits ci-dessus comme l'illustre en particulier le brevet EP-0.820.879. Cependant, les couvercles connus de l'état de la technique utilisent un simple joint à lèvre comme joint d'étanchéité. Un simple joint à lèvre ne donne pas entièrement satisfaction en ce qui concerne l'étanchéité du couvercle au niveau du passage d'axe traversé par le corps allongé rotatif du moyen d'agitation.

En outre, on observe qu'un simple joint à lèvre s'use prématurément au contact avec les éléments abrasifs présents dans le liquide contenu dans le récipient, ce qui rapidement ne permet plus au joint à lèvre d'assurer sa fonction d'étanchéité.

On remarque également que la partie ménagée dans le passage d'axe pour la réception du joint peut présenter des variations de cote qui entrainent un positionnement du joint annulaire dans le logement tel que l'axe de l'ouverture du joint annulaire est décalé par rapport à l'axe du passage d'axe, ce qui entraine un problème de centrage du corps allongé du moyen d'agitation au moment de son montage dans le passage d'axe à travers le couvercle. Le décentrage de l'axe du joint par rapport à l'axe du passage d'axe pose également des problèmes de serrage de la paroi interne du joint contre le corps allongé du moyen d'agitation qui le traverse et donc des problèmes d'étanchéité.

La présente invention a pour but de proposer un nouveau couvercle équipé d'un joint d'étanchéité permettant d'améliorer l'étanchéité entre le couvercle et le corps allongé du moyen d'agitation, c'est-à-dire au niveau du passage d'axe ménagé à travers le couvercle.

Un autre but de l'invention est de proposer un nouveau couvercle équipé d'un joint d'étanchéité permettant d'améliorer le centrage du moyen d'agitation par rapport au passage d'axe ménagé dans le couvercle au cours du montage dudit moyen d'agitation à travers le couvercle.

Un autre but de l'invention est de proposer un nouveau couvercle équipé d'un joint d'étanchéité dont la conception permet de limiter l'usure dudit joint vis-à-vis des produits abrasifs contenus dans le récipient fermé par le couvercle.

A cet effet, l'invention a pour objet un couvercle de fermeture pour récipient de liquide, ledit couvercle comprenant un passage d'axe permettant le passage à travers le couvercle d'un corps allongé d'un moyen d'agitation destiné à être monté rotatif dans ledit passage d'axe, ledit passage d'axe comprenant une partie dite de réception logeant un joint d'étanchéité annulaire destiné à être traversé par ledit corps allongé du moyen d'agitation, caractérisé en ce que la face périphérique interne dudit joint d'étanchéité annulaire comprend une lèvre hélicoïdale.

La lèvre hélicoïdale forme par ses spires une succession de barrières pour le liquide ce qui permet d'améliorer l'étanchéité dynamique du couvercle au niveau du passage d'axe.

En particulier, si une spire de la lèvre est attaquée par le liquide, la spire suivante forme une autre barrière qui maintient l'étanchéité entre le passage d'axe et le moyen d'agitation qui le traverse.

En outre, la réalisation de la lèvre d'étanchéité du joint d'étanchéité sous forme d'un filet hélicoïdal avec une pluralité de spires consécutives permet de limiter le serrage de la lèvre de chaque spire contre le corps du moyen d'agitation et ainsi de réduire l'usure du joint et du corps allongé du moyen d'agitation.

Une telle limitation de serrage, rendue possible par l'utilisation d'une lèvre hélicoïdale, permet de réaliser le corps rotatif du moyen d'agitation en une matière plastique chargée en verre qui est moins coûteuse que le métal mais plus abrasive pour le joint.

Enfin, une telle conception du joint d'étanchéité annulaire avec lèvre hélicoïdale permet de ne pas avoir à équiper le joint d'étanchéité d'anneau ressort au niveau de la ou des lèvres ou d'armature de maintien au niveau de la paroi extérieure du joint, ce qui limite le coût du joint et donc du couvercle.

Le joint d'étanchéité permet ainsi d'assurer un niveau d'étanchéité aux fluides suffisant, en particulier pour l'ensemble des peintures utilisées en carrosserie automobile.

Préférentiellement, le joint annulaire est un joint à deux parois périphériques reliées l'une à l'autre par une liaison souple.

De préférence, lesdites parois dites respectivement interne et externe, sensiblement coaxiales, sont écartées l'une de l'autre et reliées l'une à l'autre par une liaison souple de type pont s'étendant, de préférence, à mi-hauteur desdites parois, dans le plan circonférentiel médian desdites parois.

Avantageusement, les spires sont espacées axialement les unes des autres pour délimiter entre elles une gorge en hélice. L'orientation des spires du filet hélicoïdal est choisie de telle sorte que, pour un sens de rotation donné du moyen d'agitation, un éventuel liquide présent dans la gorge en hélice, délimitée entre les spires, est refoulé dans le récipient par rotation dudit moyen d'agitation.

La face périphérique interne dudit joint d'étanchéité comprend également une lèvre d'étanchéité circulaire située à proximité de la face d'ouverture du joint d'étanchéité annulaire opposée à celle destinée à être orientée côté récipient.

Cette lèvre d'étanchéité circulaire réalise l'étanchéité statique aux vapeurs de solvant lors du stockage statique, ainsi qu'aux liquides lors des manipulations du récipient, la lèvre circulaire permettant l'obturation de la gorge en hélice délimitée par les spires du filet hélicoïdal.

La lèvre hélicoïdale limite l'accès du liquide à la lèvre d'étanchéité circulaire, ce qui permet de limiter l'usure de la lèvre circulaire qui forme la dernière barrière d'étanchéité. En effet, le produit doit préalablement monter dans le filet avant d'atteindre la lèvre d'étanchéité. Ainsi, dans le cas de peinture abrasive, on obtient une usure plus progressive de la lèvre d'étanchéité circulaire, ce qui permet de prolonger significativement la durée de vie du produit.

En particulier, les produits abrasifs sont généralement visqueux et pénètrent ainsi de façon limitée dans le filet, de sorte que l'usure du joint d'étanchéité est limitée à une hauteur réduite.

De préférence, ledit joint d'étanchéité annulaire est réalisé en un matériau thermoplastique, tel qu'un élastomère thermoplastique.

Selon une autre caractéristique avantageuse de l'invention, ledit couvercle est équipé dudit moyen d'agitation dont le corps allongé, tel que tige, est monté rotatif à travers le passage d'axe du couvercle et le joint d'étanchéité.

Préférentiellement, ledit corps allongé est équipé à, ou au voisinage de, une extrémité, d'au moins un organe d'agitation tel que pale et à, ou au voisinage de, l'extrémité opposée, d'une partie de prise pour l'entrainement en rotation dudit corps allongé du moyen d'agitation.

L'invention concerne également un récipient de liquide, de préférence de peinture, équipé d'un couvercle de fermeture, caractérisé en ce que ledit couvercle est tel que décrit ci-dessus.

L'invention concerne également un joint d'étanchéité annulaire pour couvercle de fermeture d'un récipient de liquide, ledit couvercle comprenant un passage d'axe permettant le passage à travers le couvercle d'un corps allongé d'un moyen d'agitation destiné à être monté rotatif dans ledit passage d'axe, ledit passage d'axe comprenant une partie dite de réception destinée à loger ledit joint d'étanchéité annulaire, caractérisé en ce que la face périphérique interne dudit joint d'étanchéité annulaire comprend une lèvre hélicoïdale.

L'invention sera bien comprise à la lecture de la description suivante d'exemples de réalisation, en référence aux dessins annexés dans lesquels :
- la figure 1 est une vue en coupe axiale en perspective d'une boîte de peinture fermée par un couvercle équipé d'un joint d'étanchéité selon l'invention, à l'état introduit du corps du moyen d'agitation à travers le couvercle et ledit joint d'étanchéité ;
- la figure 2 est une vue en coupe axiale en perspective du joint d'étanchéité du couvercle de la figure 1.

En référence aux figures et comme rappelé ci-dessus, l'invention concerne un couvercle 2 de fermeture pour récipient 4 de liquide, de préférence pour boîte de peinture.

Ledit couvercle 2 comprend un passage d'axe 20 permettant le passage à travers le couvercle 2 d'un corps allongé 30 d'un moyen d'agitation 3 destiné à être monté rotatif dans ledit passage d'axe 20 pour l'agitation dudit liquide. Ledit passage d'axe 20 comprend, d'une part, une partie 23 dite de réception du corps allongé 30 destinée à être traversée par le corps 30 allongé du moyen d'agitation 3, et, d'autre part, une partie dite de réception 21 de joint d'étanchéité 1, de diamètre interne supérieur au diamètre interne de la partie de réception 23 du corps 30 allongé. Ladite partie de réception 21 de joint d'étanchéité 1 loge un joint 1 d'étanchéité annulaire destiné à être traversé par ledit corps allongé 30 du moyen d'agitation 3. Ledit moyen d'agitation 3 permet de maintenir l'homogénéité du produit contenu dans le récipient, en particulier dans le cas d'un pot de peinture.

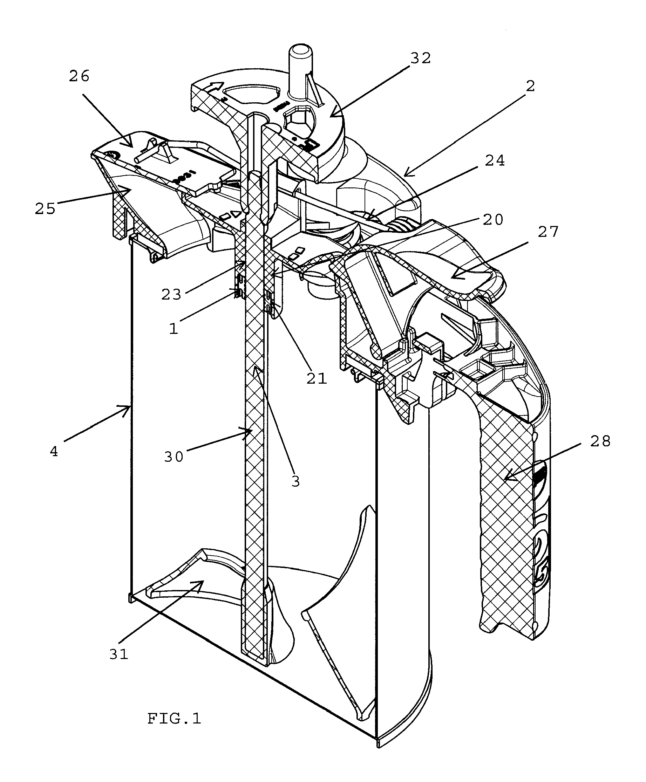

Comme illustré à la figure 1, le couvercle 2 selon l'invention est destiné à la fermeture d'un pot ou autre récipient 4 de liquide. Ce couvercle 2 est un couvercle de précision qui présente un bec 25 verseur à obturateur 26 coulissant sollicité par un ressort 24 du type à épingle à cheveux. Cet obturateur 26 est commandé en déplacement par un levier 27 d'ouverture pivotant. Ledit couvercle 2 est manipulé par l'intermédiaire d'une poignée 28 de préhension.

Le récipient 4 et son couvercle 2 peuvent être logés dans une armoire de stockage disposant d'un ou plusieurs emplacements de stockage dudit récipient. Chaque emplacement est équipé d'un moyen d'actionnement du moyen d'agitation pour agiter le liquide par rotation du corps du moyen d'agitation. En particulier, ledit couvercle 2 peut être appliqué aux récipients dits suspendus au niveau de leur couvercle ou encore aux récipients posés dans une armoire d'agitation. Le couvercle est équipé de moyens de fixation au récipient 4. Avantageusement, le couvercle peut s'adapter à des boîtes de différents diamètres.

Dans le cas des récipients posés, le couvercle 2 est mobile en translation par rapport au corps allongé 30, appelé axe, du moyen d'agitation 3, ce qui permet de s'adapter à des boîtes de différentes profondeurs, correspondant à des contenances par exemple de 0, 5 L et de 1 L.

Dans l'exemple illustré à la figure 1, ledit couvercle 2 est équipé dudit moyen d'agitation 3 dont le corps allongé 30, tel que tige, est monté rotatif à travers le passage d'axe 20 du couvercle 2 et le joint d'étanchéité 1. Ledit corps allongé 30 est équipé à, ou au voisinage de, une extrémité, d'au moins un organe d'agitation 31 tel que pale et à, ou au voisinage de, l'extrémité opposée, d'une partie de prise 32 pour l'entrainement en rotation dudit corps allongé 30 rotatif du moyen d'agitation 3. Ladite partie de prise peut être soit une fourchette d'entraînement pour les boîtes dites posées, soit un pignon d'entraînement pour les boîtes dites suspendues. En particulier, dans l'exemple illustré à la figure 1, l'axe 30 porte une pale d'agitation 31 dont l'entraînement en rotation par l'intermédiaire du corps rotatif du moyen d'agitation permet l'agitation de la peinture contenue dans le pot.

De manière caractéristique à l'invention, la face périphérique interne dudit joint 1 d'étanchéité annulaire comprend une lèvre hélicoïdale 120.

Autrement dit, le joint d'étanchéité 1 est positionné dans un logement 21 ménagé dans le passage d'axe 20, ledit logement 21 dudit joint étant coaxial au passage d'axe 20 et situé côté face inférieure, c'est-à-dire côté face orientée vers la face intérieure du récipient ou face opposée à la face supérieure dudit couvercle équipée du mécanisme d'obturation du bec verseur. En particulier, le logement 21 est formé par un épaulement dans le passage d'axe 20 de sorte que ledit logement débouche côté face inférieure du couvercle, ce qui permet une introduction et une extraction du joint par rapport à son logement depuis la face inférieure du couvercle.

Le diamètre intérieur dudit joint annulaire 1, pris au niveau de la ligne sommet du filet, qui assure un léger serrage sur le corps allongé 30 du moyen d'agitation 3, est de préférence sensiblement inférieur au diamètre intérieur de la paroi de la partie 23 du passage d'axe 20 destinée au guidage en rotation avec jeu du corps allongé 30 du moyen d'agitation 3.

Le joint annulaire 1 est un joint à deux parois périphériques 10, 11 reliées l'une à l'autre par une liaison souple 101. Lesdites parois dites respectivement interne 11 et externe 10, sensiblement coaxiales, sont écartées l'une de l'autre et reliées l'une à l'autre par une liaison souple 101 de type pont s'étendant, de préférence, à mi-hauteur desdites parois, dans le plan circonférentiel médian desdites parois.

La liaison souple 101 de type pont forme une plateforme circulaire reliant lesdites parois entre elles. La double paroi présente en coupe transversale une forme en H.

La liaison souple 101, déformable élastiquement, permet un bon centrage du corps allongé 30 de moyen d'agitation 3 à travers le joint 1 et le passage d'axe 20. En particulier, ladite liaison souple 101 permet l'auto-alignement entre le passage d'axe 20, ou palier, du couvercle 2 et la lèvre hélicoïdale 120 du joint d'étanchéité 1 lors de l'introduction du corps allongé 30 du moyen de d'agitation 3 à travers le passage d'axe 20 et le joint d'étanchéité 1.

La liaison souple 101, permet de plus la dissociation des parois externe 10 et interne 11 qui ont des fonctions différentes. La paroi 10 a pour fonction le maintien par serrage à force du joint 1 dans son logement 21. La paroi 11 a pour fonction l'étanchéité par serrage léger sur le corps allongé 30 du moyen d'agitation 3.

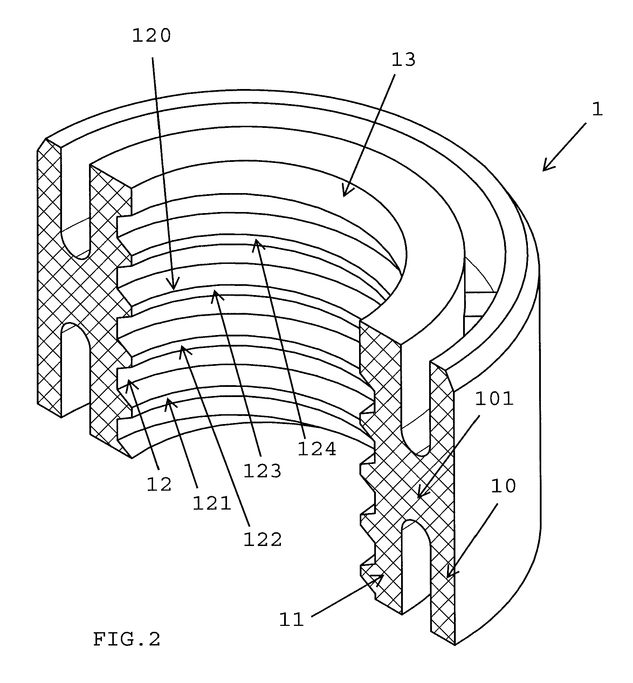

Comme illustré plus particulièrement à la figure 2, la lèvre hélicoïdale 120 comprend une pluralité de spires 121, 122, 123, 124 formant le filet hélicoïdal de la lèvre hélicoïdale 120 du joint d'étanchéité .

Les spires 121, 122, 123, 124 sont espacées axialement les unes des autres pour délimiter entre elles une gorge 12 en hélice. Ainsi, un liquide qui se serait introduit entre le joint 1 et le corps allongé 30 du moyen d'agitation 3 s'écoule dans ladite gorge 2 et retombe par gravité dans le pot de peinture 4 en parcourant ledit chemin en hélice.

Le refoulement dudit liquide éventuellement monté dans la gorge en hélice 12 est également amélioré par la rotation du moyen d'agitation 3. L'orientation de la lèvre hélicoïdale 120 est définie en fonction du sens de rotation du corps allongé 30 du moyen d'agitation pour participer au refoulement dudit liquide vers l'intérieur du récipient. Lorsque le corps allongé 30 du moyen d'agitation 3 est destiné à être tourné en sens horaire, le filet hélicoïdal correspond à un filetage à droite. A l'inverse, lorsque le corps allongé 30 est destiné à être tourné en sens anti-horaire, le filet hélicoïdal correspond à un filetage à gauche. On entend par filetage à droite, respectivement à gauche, un filet ou filetage qui, dans la vue axiale, recule en tournant dans le sens horaire, respectivement dans le sens anti-horaire.

La face périphérique interne dudit joint 1 d'étanchéité comprend également une lèvre d'étanchéité circulaire 13 située à proximité de la face d'ouverture dite supérieure du joint 1 d'étanchéité annulaire opposée à celle, dite inférieure, destinée à être orientée côté récipient 4. Autrement dit, ladite lèvre d'étanchéité circulaire 13 est située en partie supérieure du joint 1, à l'état monté dudit joint 1 dans le couvercle 2 qui ferme le récipient 4.

Cette lèvre circulaire 13 réalise la fermeture de la gorge 12 formée par la lèvre hélicoïdale 120 en partie supérieure. Elle permet ainsi d'assurer l'étanchéité statique aux vapeurs de solvant ainsi qu'aux liquides.

Ledit joint 1 d'étanchéité annulaire est réalisé en un matériau thermoplastique, tel qu'un élastomère thermoplastique.

La présente invention n'est nullement limitée aux modes de réalisation décrits et représentés, mais l'homme du métier saura y apporter toute variante conforme à son esprit.

## Revendications

1. Couvercle (2) de fermeture pour récipient (4) de liquide, ledit couvercle comprenant un passage d'axe (20) permettant le passage à travers le couvercle (2) d'un corps allongé (30) d'un moyen d'agitation (3) destiné à être monté rotatif dans ledit passage d'axe (20), ledit passage d'axe (20) comprenant une partie dite de réception (21) logeant un joint (1) d'étanchéité annulaire destiné à être traversé par ledit corps allongé (30) du moyen d'agitation (3),
**caractérisé en ce que** la face périphérique interne dudit joint (1) d'étanchéité annulaire comprend une lèvre hélicoïdale (120),
et **en ce que** la face périphérique interne dudit joint (1) d'étanchéité comprend également une lèvre d'étanchéité circulaire (13) située à proximité de la face d'ouverture du joint (1) d'étanchéité annulaire opposée à celle destinée à être orientée côté récipient (4).

2. Couvercle (2) selon la revendication 1, **caractérisé en ce que** le joint annulaire (1) est un joint à deux parois périphériques (10, 11) reliées l'une à l'autre par rapport à une liaison souple.

3. Couvercle (2) selon la revendication 2, **caractérisé en ce que** lesdites parois dites respectivement interne (11) et externe (10), sensiblement coaxiales, sont écartées l'une de l'autre et reliées l'une à l'autre par une liaison souple (101) de type pont s'étendant, de préférence, à mi-hauteur desdites parois, dans le plan circonférentiel médian desdites parois.

4. Couvercle (2) selon l'une des revendications précédentes, **caractérisé en ce que** la lèvre hélicoïdale (120) comprend une pluralité de spires (121, 122, 123, 124).

5. Couvercle (2) selon la revendication 4, **caractérisé en ce que** les spires (121, 122, 123, 124) sont espacées axialement les unes des autres pour délimiter entre elles une gorge (12) en hélice.

6. Couvercle (2) selon la revendication 5, **caractérisé en ce que** l'orientation des spires (121, 122, 123, 124) du filet hélicoïdal est choisie de telle sorte que, pour un sens de rotation donné du moyen d'agitation, un éventuel liquide présent dans la gorge en hélice, délimitée entre les spires, est refoulé dans le récipient par rotation dudit moyen d'agitation.

7. Couvercle (2) selon l'une des revendications précédentes, **caractérisé en ce que** ledit joint (1) d'étanchéité annulaire est réalisé en un matériau thermoplastique, tel qu'un élastomère thermoplastique.

8. Couvercle (2) selon l'une des revendications précédentes, **caractérisé en ce que** ledit couvercle (2) est équipé dudit moyen d'agitation (3) dont le corps allongé (30), tel que tige, est monté rotatif à travers le passage d'axe (20) du couvercle (2) et le joint d'étanchéité (1).

9. Récipient (4) de liquide, de préférence de peinture, équipé d'un couvercle de fermeture (2), **caractérisé en ce que** ledit couvercle (2) est conforme à l'une des revendications précédentes.

## Patentansprüche

1. Verschlussdeckel (2) für einen Flüssigkeitsbehälter (4), wobei der Deckel einen Achsdurchgang (20) umfasst, der den Durchgang eines länglichen Körpers (30) eines Rührmittels (3) durch den Deckel (2) erlaubt, das dazu bestimmt ist, drehend in dem Achsdurchgang (20) montiert zu sein, wobei der Achsdurchgang (20) einen Aufnahmeteil (21) zur Aufnahme einer ringförmigen Dichtung (1) umfasst, die dazu bestimmt ist, von dem länglichen Körper (30) des Rührmittels (3) durchquert zu sein,
**dadurch gekennzeichnet, dass** die innere Umfangsseite der ringförmigen Dichtung (1) eine schraubenförmige Lippe (120) umfasst,
und dass die innere Umfangsseite der Dichtung (1) ebenfalls eine kreisförmige Dichtlippe (13) umfasst, die sich in der Nähe der Öffnungsseite der ringförmigen Dichtung (1) befindet, die der Seite gegenüberliegt, die zur Ausrichtung zur Seite des Behälters (4) bestimmt ist.

2. Deckel (2) nach Anspruch 1, **dadurch gekennzeichnet, dass** die ringförmige Dichtung (1) eine Dichtung mit zwei Umfangswänden (10, 11) ist, die im Verhältnis zu einer elastischen Verbindung miteinander verbunden sind.

3. Deckel (2) nach Anspruch 2, **dadurch gekennzeichnet, dass** die etwa koaxiale innere (11) bzw. äußere (10) Wand voneinander beabstandet sind und miteinander durch eine elastische Verbindung (101) vom Typ Brücke verbunden sind, die sich vorzugsweise auf halber Höhe der Wände in der mittleren Umfangsebene der Wände erstreckt.

4. Deckel (2) nach einem der vorangehenden Ansprüche, **dadurch gekennzeichnet, dass** die schraubenförmige Lippe (120) eine Vielzahl von Windungen (121, 122, 123, 124) umfasst.

5. Deckel (2) nach Anspruch 4, **dadurch gekennzeichnet, dass** die Windungen (121, 122, 123, 124) axial voneinander beabstandet sind, um zwischen sich eine schraubenförmige Nut (12) zu begrenzen.

6. Deckel (2) nach Anspruch 5, **dadurch gekennzeichnet, dass** die Ausrichtung der Windungen (121, 122, 123, 124) des schraubenförmigen Netzes derart ausgewählt ist, dass für eine bestimmte Rotationsrichtung des Rührmittels eine eventuelle in der schraubenförmigen, zwischen den Windungen begrenzten Nut vorhandene Flüssigkeit durch die Rotation des Rührmittels in den Behälter gefördert wird.

7. Deckel (2) nach einem der vorangehenden Ansprüche, **dadurch gekennzeichnet, dass** die ringförmige Dichtung (1) aus einem thermoplastischen Material wie es ein thermoplastisches Elastomer ist, hergestellt ist.

8. Deckel (2) nach einem der vorangehenden Ansprüche, **dadurch gekennzeichnet, dass** der Deckel (2) mit dem Rührmittel (3) ausgestattet ist, dessen länglicher stangenförmiger Körper (30) rotierend durch den Achsdurchgang (20) des Deckels (2) und die Dichtung (1) montiert ist.

9. Behälter (4) für eine Flüssigkeit, vorzugsweise für eine Farbe, der mit einem Verschlussdeckel (2) ausgestattet ist, **dadurch gekennzeichnet, dass** der Deckel (2) einem der vorangehenden Ansprüche entspricht.

## Claims

1. A closing cover (2) for a liquid container (4), said cover comprising an axle passage (20) allowing the passage through the cover (2) of the elongated body (30) of a stirring means (3) designed to be rotatably mounted in said axle passage (20), said axle passage (20) comprising a so-called receiving part (21) housing an annular seal (1) designed to be passed through by said elongated body (30) of the stirring means (3),
**characterized in that** the inner peripheral face of said annular seal (1) comprises a helical lip (120),
and **in that** the inner peripheral face of said seal (1) also comprises a circular sealing lip (13) situated near the opening face of the annular seal (1) opposite that intended to be oriented on the container side (4).

2. The cover (2) according to claim 1, **characterized in that** the annular seal (1) is a seal with two peripheral walls (10, 11) connected to each other by a flexible connection.

3. The cover (2) according to claim 2, **characterized in that** said substantially coaxial so-called inner (11) and outer (10) walls, respectively, are separated from one another and connected to each other by a flexible connection (101) of the bridge type, preferably extending, at mid-height along said walls, in the median circumferential plane of said walls.

4. The cover (2) according to one of the preceding claims, **characterized in that** the helical lip (120) comprises a plurality of turns (121, 122, 123, 124).

5. The cover (2) according to claim 4, **characterized in that** the turns (121, 122, 123, 124) are axially spaced apart from one another to delimit a helical groove (12) between them.

6. The cover (2) according to claim 5, **characterized in that** the orientation of the turns (121, 122, 123, 124) of the helical thread is chosen such that, for a given rotation of the stirring means, any liquid present in the helical groove, delimited between the turns, is discharged in the container by rotation of said stirring means.

7. The cover (2) according to one of the preceding claims, **characterized in that** said annular seal (1) is made from a thermoplastic material, such as a thermoplastic elastomer.

8. The cover (2) according to one of the preceding claims, **characterized in that** said cover (2) is equipped with said stirring means (3) whereof the elongated body (30), such as a stem, is rotatably mounted through the axle passage (20) of the cover (2) and the seal (1).

9. A container (4) for liquid, preferably paint, equipped with a closing lid (2), **characterized in that** said cover (2) is according to one of the preceding claims.
